# EUROPEAN PATENT APPLICATION

(11) **EP 1 659 731 A1**
(43) Date of publication of application: **24.05.2006**
(21) Application number: 04027320.3
(22) Date of filing: 17.11.2004
(51) Int. Cl.: H04L 12/10, G01M 17/007, H04B 3/54

(54) **Network system for a vehicle testing environment**

(71) Applicant: Snap-on Equipment Srl a unico socio., 42015 Correggio (Reggio Emilia) (IT)
(72) Inventor: Braghiroli, francesco, 42100 Reggio Emilia (IT)
(74) Representative: Eisenführ, Speiser & Partner

(57) **Abstract**

The invention relates to a network system for automotive shops comprising at least one computer-aided automotive shop machine an and a respective computer network, wherein said computer-aided machine is connected to said computer network by communication means configured to communicated by transmission of information signals on a power supply line. Further, the invention relates to a machine for an automotive shop comprising computer and communication means configured to communicate by transmission of information signals on a power supply line or to supply power to at least one peripheral functionality over a communication line.

## Description

The present invention relates to a network system for automotive shops and a machine therefore.

In conventionally working service and testing workshops a lot of activities are unproductive. In an investigation of three conventional work stations - brake testing, exhaust emission testing and engine diagnosis - has been discovered that round about 8 minutes are wasted for each client for each work station from repeat data entry alone. For instance, a conventional workshop with a daily throughput of 20 vehicles, using the three workstations, will lose 15 hours of manpower over the average working week. Therefore, products such as brake test stands and wheel aligners have been made fully ASA network compatible. This results in that customer data is entered only once leaving the operator to spend more time working on the vehicle, reducing input errors and avoiding unnecessary duplication of information. Hence, networked automotive machinery has brought savings in time and increases in efficiency.

However, whilst such ASA network compatible automotive shop machines provide benefits, there have been encountered some certain drawbacks. Firstly, for the connection of a particular machine to the shop network it is necessary to establish a network connection which uses specific cables, e.g. Ethernet, RS232 or alike. That is additional cables and wires running from the machine to a network connection socket. There is further the base or core network wiring which has to be installed to which the machines are connected. Thus, it is clear that beside the cost for network compatible machines remarkable installation costs are burdened onto the automotive shopkeepers budget.

Secondly, conventional network cables are not suited for the rough use within the circumference of an automotive shop. In particular, tiny network cable plugs can easily be broken or damaged which leads to additional continuous costs for replacement. Of course, it is possible that special armed network cables which are made of chemical and oil resistive materials could be used as well as robust high quality network plugs and sockets could be installed to counteract this problem. However, again increase installation costs are generated.

Thirdly, it goes without saying that sophisticated network technology is not even the technology to which the ordinary automotive shop mechanic is used. Thus, besides the advantages of networked machines the acceptance strongly depends on the user usability.

It is therefore, an objective of the present invention to provide a system of networked machines in and for automotive shops in which the network connection of the respective machines is easy to handle for the user and does not require specific knowledge about network technology, at all.

It is another objective of the invention to provide a network compatible machine for use in automotive shops which provides a maximum of robustness and reliability in an environment as that of an automotive shop with regard to the network functionality.

It is yet another objective of the present invention to provide a machine for use in automotive shops, which can easily be integrated into a computer network of an automotive shop. Yet a further objective is to have a network-compatible machine for automotive shops that enable set-up of a network of respective machines without the need for further network infrastructure.

It is yet another objective of the present invention to provide a machine for use in an automotive shop which comprises peripheral functionality with which an exchange of control and/or measurement data is required, wherein means for said data communication provide a maximum of robustness and reliability in an environment as that of a automotive shop. Further, cabling and wiring efforts should be reduced.

The above-mentioned objectives regarding the system are solved by a system regarding to the features of claim 1, wherein said system particularly comprises one or more machines with a computer-aided operation for an automotive shop and a respective computer network, wherein said machine or machines is or are connected to said computer network by communication means configured to communicated by transmission of information signals on a power supply line.

The above-mentioned objectives regarding the machine are furthermore solved by a machine according to the features of claim 8, wherein said machine for an automotive shop comprises particularly computer means and communication means configured to communicated by transmission of information signals on a power supply line.

The above-mentioned objectives regarding the machine are furthermore solved by a machine according to the features of claim 14, wherein said machine for an automotive shop comprises computer and communication means configured to supply power to at least one peripheral functionality over a communication line.

In one embodiment, said communication means comprise at least power line modem means configured to provide network functionality over a connection to said power supply line. Basically, the general principle of the invention can be used for any kind of machines in an automotive shop. Such machines are used for the maintenance, repair, mounting, measuring and testing of motor vehicles and motor vehicle parts. For example said machines are wheel balancers, wheel aligners, car diagnosis stands, brake testing stands, test stands for automobile engines, test stands for testing waste gases or exhaust gases, respectively.

In a further embodiment of the invention, one network element of said computer network is a central computer that operates said shop network. Advantageously, on said central computer may be hosted operational data of said at least one automotive shop machine. Such operational data may be control data for operation of said machine or may be data which is related to technical information related to object on which said machine is used in operation. Such objects may be mechanical or electrical equipment of an automotive vehicle such as brake systems, motor control electronics, tires and rims, etc.

In another embodiment of the invention, one predetermined automotive shop machine comprises said central computer. Advantageously, it is not necessary to have an extra central computer for running and administering, respectively, the network of said networked automotive shop machines. More advantageously, there is no need for extra network infrastructure at all.

As to said machine for an automotive shop comprising computer and communication means configured to communicated by transmission of information signals on a power supply line, in a first embodiment, said machine power supplied by a mains connection comprises said computer and may be connected to a computer network via said power supply line. In a further development, said computer of said machine can be further configured to operate and administer, respectively, a computer network. Basically, said machines are applicable for use in an automotive shop. Preferably, said machine is one of a balancer, wheel aligner, car diagnosis stand, brake testing stand and alike. Advantageously, by a machine according to the invention it would be possible to have at least one machine or at least one central computer for operation of respective other machines connected to said network. Hence, said other machines only need necessary hardware for running primary functions of each machine. For instance, a wheel balancer connected to such a network only comprises the components needed for controlling and conducting the unbalance measurement. Entry of applicable tire and rim data, calculation of the optimal weight positions for balancing the wheel can be done by said central computer. Hence, by the invention the cost for such machines can be reduced and additionally, by having less hardware components, i.e. computer components, on such machines the reliability would be increased.

In a second embodiment of said machine according to the invention, said power supply line is arranged for supplying power to at least one peripheral functionality of said respective machine. Said at least one power supplied peripheral functionality comprise communication means configured to communicated by transmission of information signals on said at least one power supply line with said computer of said machine. As an alternative solution, said machine may have communication means that are configured to supply power to said at least one peripheral functionality of said machine over a communication line. Thus, cabling and wiring efforts are reduced. Also such machines with peripheral functionality is easier to handle and to set-up. In a preferred embodiment of the second embodiment, said machine is a wheel aligner and said at least one peripheral functionality is a measuring head of the wheel aligner.

The invention provides several advantages over network compatible machines in the prior art. Firstly, the installation efforts for network integration of machines in an automotive shop are reduced by the invention to a minimum. Further, the solution according the invention provides a maximum robustness and flexibility of the network infrastructure. Furthermore, whilst the mechanics of the automotive shop can make use of the benefits of networked machines, there is no need to get in touch with the network related technology, at all.

Moreover, there will be a much more efficient operation of the shop by time savings, for instance, due to the possibility to enter or to retrieve customer data at every station of the shop, error reduction due to a central data management for the whole shop. Also, it provides a direct link between the shop administration data management and each machine station of the shop, thus the sequence of operations workflow can be optimized for the employed mechanic or the foreman. A continuous tracking of all actual jobs in the shop enables a better use of the capacity of the stations that leads to better ratio between earnings and expenses. Finally yet importantly, easily can be provided a close history of all relevant measurement and test data, test protocols as well as other documentation.

The invention will be more completely understood in consideration of the following detailed description of various embodiments of the invention in connection with the accompanying drawings, in which:
- Fig. 1: shows a simplified block diagram of a power line modem;
- Fig. 2: shows a simplified block diagram of a coupling transformer with high pass characteristic;
- Fig. 3: shows a simplified block diagram of networked machines in an automotive shop, wherein a central computer running the network is present;
- Fig. 4: shows a simplified schematic of networked machines in an automotive shop, wherein the function of the central computer running the network is provided by at least one particular machine of the network; and
- Fig. 5: is a block diagram of a first preferred embodiment of an automotive shop machine with power line connected peripheral functionalities.

While the invention is amendable to various modifications and alternative forms, specifics thereof will be shown by way of example in the drawings and will be described in detail. However, it should be understood that the intention is not to limit the invention to particular embodiments described. On the contrary, the intention is to cover all modifications, equivalents, and alternatives falling within the scope of the invention as defined by the appended claims.

The general concept of the invention is the idea to have machines in a automotive shop, e.g. balancers, aligners, or whatsoever, "networked" without using specific cables such as Ethernet cables, RS232 cables, or radios. But using the power supply line as a network hardware layer. This means that according to a first aspect of the invention machines can communicate simply by having their main plug connected to the wall socket.

For the implementation of the invention, there are used special adapted modems for communication using the mains power lines, e.g. the 230VAC wires. Such modems are called power line modems which allow to communicate over power lines, e.g. at up to 14 Mbps. The power line modem transmits and receives data through the power line, or mains. Its use requires a duplex-mode power line modem that transmits and receives data.

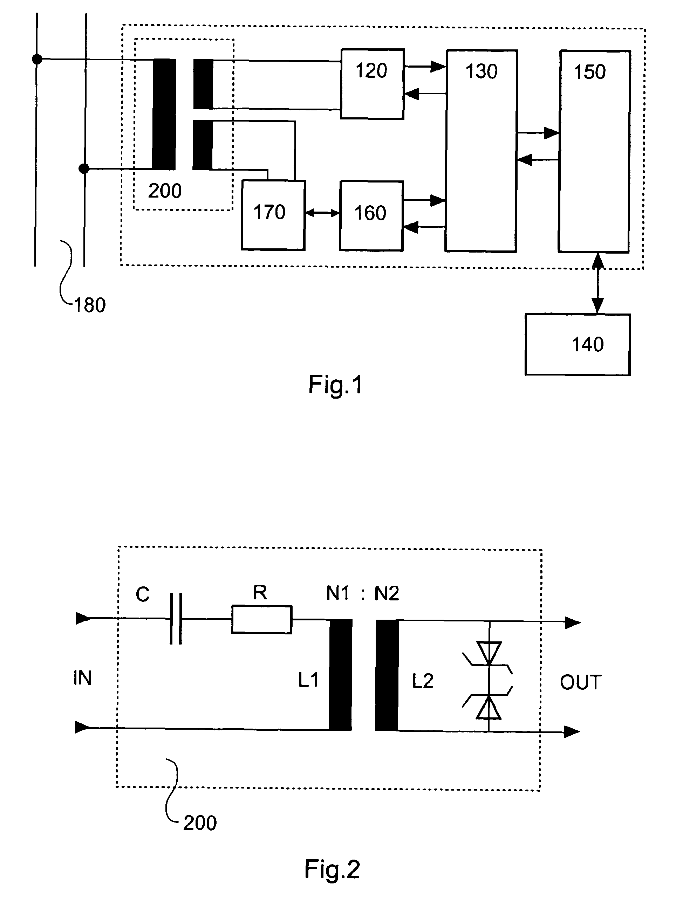

Now reference is made to Fig. 1, which shows a simplified block diagram of a power line modem 100. An incoming signal is coupled by means of a coupling transformer 200 to a receiving analog-to-digital converting (ADC) component 120 of the modem 100. A coder-decoder (codec) component 130 of the modem 100 decodes the data and delivers it to the application running on a computer 140, which is present at the respective machine, through a data interface 150. The application returns data to the modem 100 through the data interface 150, where it is coded by the coder-decoder (codec) component 130. Then a signal for transmission is generated and coupled into the power line 180 through the PWM 160 and power stage interfaces 170.

Commonly used schemes for modulation include, for instance, binary phase shift keying (BSK), frequency shift keying (FSK) and several other spread spectrum techniques. For example, orthogonal frequency division multiplexing (OFDM) is reliable in high-speed applications. The modulation scheme supports also networking and independent addressing of the end devices, i.e. the machines and central computer, respectively, as well as further network elements such as printers or wide area network bridges. The physical interface provides for coupling the signal from the codec 130 to the power line 180 and from the power line 180 to the codec 130.

A coupling transformer 200 with high pass characteristic, as shown in Fig. 2, is a possible solution for the needed physical interface. It provides the necessary galvanic isolation of the power line 180 from the main voltage. For power line communication it is necessary to have a coupling transformer for the data transmission between the electric cabling and the transceiver. Its inductances L1, L2 should have a value between 10 µH and 2 mH and its electrical insulation depends on its application. The capacitor C in the system is for blocking the 50 or 60Hz, respectively, frequency of the power supply currents. In a one-phase operation, the transformer 200 should be connected in parallel between one phase and neutral for 230 V while for a three-phase operation, it should be connected between two of the three phases. A serial connection of the coupling transformer is not recommended, because it may result in a magnetic saturation of the transformer core.

Known network compatible, e.g. ASA network, machines in automotive shops, however, are mainly used for shop management. According to the invention, there is no more specific external hardware necessary such as cables, hubs, sockets, radios, etc. Thus, the user does not need to know anything specific about the networking hardware layer.

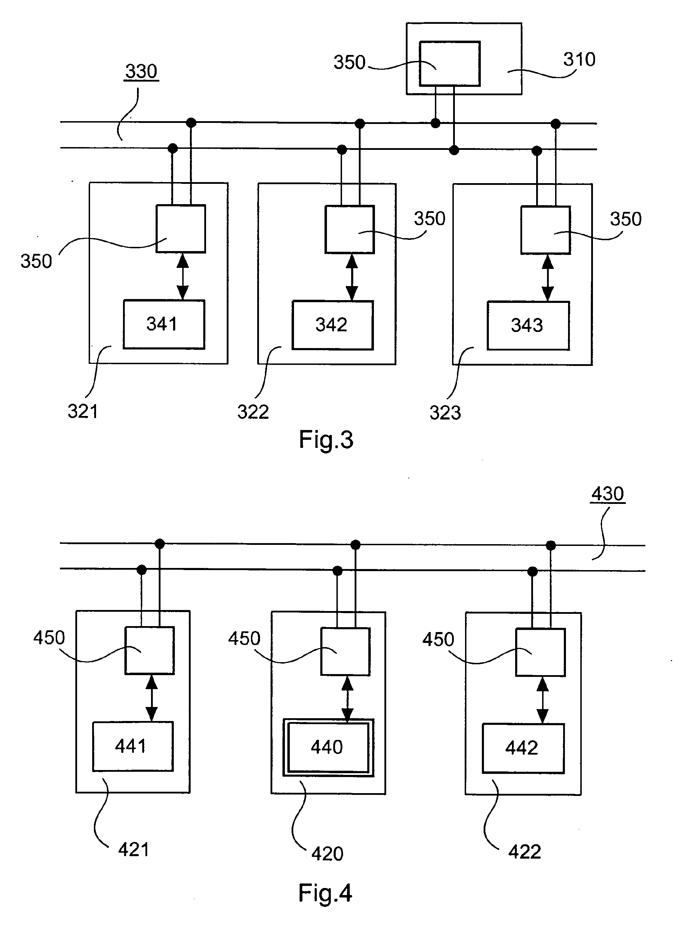

According to one aspect of the invention, a central computer of the automotive shop network may run a specific software in order to manage and administer the network, to collect data and to calculate statistical data, diagnostic indexes, etc. Further, such a central computer may manage the orders or jobs in the shop, etc. In Fig. 3 shows a simplified block diagram of machines networked according to the present invention in an automotive shop. There is a central computer 310 by which the network is administered and operated. The network infrastructure is provided by the re-use of the power supply line 330 to which the central computer 310 as well as the networked machines 321, 322, 323 are connected. For the purpose of communication via the power supply line 330 the central computer 310 and the respective computers 341, 342, 343 of the respective machines 321, 322, 323 are equipped with respective power line modems 350.

According to a second aspect of the invention, this can also be performed by one of the shop machines connected to the network. Such a machine may be, for instance, a balancer or an aligner running the networking software on its own internal computer. Since most actual wheel aligners include a state-of-the-art personal computer (PC), and most CRT wheel balancers include a PC. Thus, only the specific unit is to be configured to act as master unit within the network. Fig. 4 shows a simplified block diagram of networked machines in an automotive shop, wherein the function of the central computer running the network is provided by at least one particular machine of the network. There is a machine 420 comprising a computer 440 by which the network is administered and operated. Once again, the network infrastructure is provided by the re-use of the power supply line 430 to which the machine 420 having the central computer 440 as well as the respective computers 441, 442 the respective networked machines 421, 422 are connected. For the purpose of communication via the power supply line 430 the central computer 440 and the respective computers 441, 442 of the respective machines 421, 422 are each equipped with power line modems 450.

Besides that, the capability of the afore-mentioned automotive shop machines such as wheel aligners, wheel balancers and so on able to share data over the power line network can be used for the following: quality control, improved vehicle diagnosis by combination of data from different diagnostic machines, e.g. wheel aligners, balancers, etc. Further, such networked machines can be used for the commercial and logistic management of the shop. For instance, complete control of the work, performed on every vehicle, for every customer, statistic about the use of every machine, etc.

Those shared operational data can be with specific reference to wheel balancers, for example, the following: running number of the wheel, rim data which can also contain information about weight placement data, tire data which may include dimensions, conicity, tread depth, mileage projection, irregular tire wear diagnosis, etc. Further, wheel data which may be width, diameter, distance between the rim and the wheel balancer, weight placement mode, number of spokes, HSP (EP 0 681 170 A2) performed yes/no, OPTIMA mode as described in EP 1 398 610 A1, EP 1 174 698 A2, unbalance values before unbalance correction (initial values), unbalance values after unbalance correction (final values, mostly 0 - 0), maximum admissible static unbalance, actual static unbalance, maximum admissible residual unbalance, actual residual unbalance, maximum admissible radial run-out of the wheel assembly (1st harmonic), actual radial run-out of the wheel assembly (1st harmonic), maximum admissible radial run-out of the wheel assembly (peak to peak), actual radial run-out of the wheel assembly (peak to peak), maximum admissible radial run-out of the rim (left and right), actual radial run-out of the rim (left and right), maximum admissible lateral run-out of the rim (left and right), actual lateral run-out of the rim (left and right), OK/NOK indication based on the limits set on the balancer (residual imbalance, run out values, static imbalance), balancer model name, balancer manufacturer /brand name, software version, counter readings (total number of measuring runs, total number of measuring runs with OK, total number of wheels clamped, total number of optimization procedures, total number of measuring runs since last calibration), statistics for weight consumption.

Moreover, it is possible to integrate data bases for clamping devices, vehicle specs (such as mid centre hole diameter, bolt circle, air pressure), wheel weights, valves to be used, possible rim tire combinations, air pressure table. Similar use and benefits will be provided for wheel aligners.

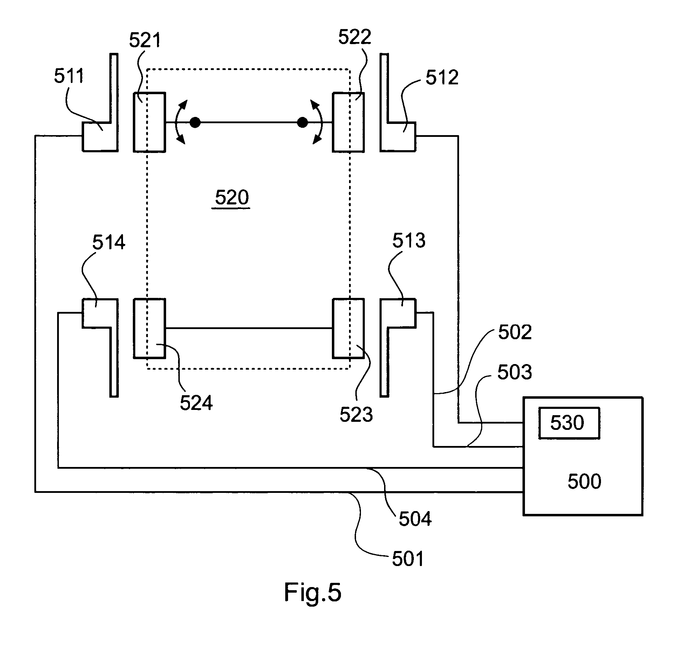

According to a third aspect of the invention, the use of power lines for data communication is also advantageous for communication between a machine and its peripheral functionalities, if any. In Fig. 5, a block diagram of a preferred embodiment is shown. A wheel aligner 500, i.e. a certain kind of automotive shop machines, having respective power lines 501, 502, 503, 504 connected to respective wheel aligner heads 511, 512, 513, 514, i.e. peripheral functionalities. In operation of the wheel aligner 500, the wheel aligner heads 511, 512, 513, 514 are mounted to respective wheels 521, 522, 523, 524 of a vehicle 520. For data communication between the respective aligner heads 511, 512, 513, 514, a computer 530 of the wheel aligner 500 is networked by means of power line modems with its respective wheel aligner heads 511, 512, 513, 514. Hence, there is no need for a wireless radio communication that is receptive for interferences and also superfluous communication wiring can be avoided. According to an alternative solution, in stead of power lines used for data communication it is also possible to use communication lines for power supply of the peripheral functionalities by the respective machine. In this case, the power lines 501, 502, 503, 504 of Fig. 5 would be communication lines, e.g. Ethernet cables, by which the machine will supply power to each peripheral functionality besides the normal data communication. It goes without saying, that the respective communication means of both the machine and the respective peripheral functionality would to be configured for this power over communication line, e.g. power over Ethernet (PoE) according to the standard IEEE802.3af.

Finally but yet importantly, it is noted that the term "comprising" when used in the specification including the claims is intended to specify the presence of stated features, means, steps or components, but does not exclude the presence or addition of one or more other features, means, steps, components or groups thereof. Further, the word "a" or "an" preceding an element in a claim does not exclude the presence of a plurality of such elements. Moreover, any reference sign do not limit the scope of the claims. Furthermore, it is to be noted that "coupled" is to be understood that there is a current path between those elements that are coupled; i. e. "coupled" does not mean that those elements are directly connected.

## Claims

1. Network system for an automotive shop comprising at least one automotive shop machine having a computer-aided operation for use in an automotive shop and a respective computer network, wherein said at least one automotive shop machine is connected to said computer network by communication means configured to communicate by transmission of information signals on a power supply line.

2. System according to claim 1, wherein said communication means comprise at least power line modem means configured to provide a network functionality over a connection to said power supply line.

3. System according to claim 1 or 2, wherein said automotive shop machine is one of a wheel balancer, wheel aligner, car diagnosis stand, brake testing stand.

4. System according to one of the preceding claims, wherein at least one network element of said computer network is a central computer which is configured to operate said shop network.

5. System according to claim 4, wherein on said central computer operational data of said automotive shop machines are hosted.

6. System according to claim 4 or 5, wherein one predetermined of said automotive shop machines comprises said central computer.

7. System according to claim 6, wherein said central computer of said predetermined automotive shop machine is further configured to operate said automotive shop machine.

8. Machine for an automotive shop comprising computer and communication means configured to communicated by transmission of information signals on a power supply line.

9. Machine according to claim 8, wherein said machine is power supplied and said computer is connected to a computer network via said power supply line.

10. Machine according to claim 8 or 9, wherein said computer of said machine is further configured to operate a computer network.

11. Machine according to one of the claims 8 to 10, wherein said machine is one of a wheel balancer, wheel aligner, car diagnosis stand, brake testing stand, engine testing stand, waste gas testing stand.

12. Machine according to claim 8, wherein said power supply line is for supplying power to at least one peripheral functionality of said machine.

13. Machine according to claim 12, wherein said at least one power supplied peripheral functionality comprises communication means configured to communicated by transmission of information signals on said at least one power supply line with said computer of said machine.

14. Machine for an automotive shop comprises computer and communication means configured to supply power to at least one peripheral functionality over a communication line.

15. Machine according to claim 14, wherein said at least one power supplied peripheral functionality comprises communication means configured to be power supplied over said communication line, by which said machine and said peripheral functionality are connected.

16. Machine according to claim 13 or 15, wherein said machine is a wheel aligner and said at least one peripheral functionality is a measuring head of said wheel aligner.
